Europäisches Patentamt

European Patent Office

Office européen des brevets

(19)

(11) **EP 1 098 261 A2**

(12) **EUROPEAN PATENT APPLICATION**

(43) Date of publication:
09.05.2001 Bulletin 2001/19

(51) Int. Cl.7: **G06F 17/60**

(21) Application number: **00123880.7**

(22) Date of filing: **02.11.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **05.11.1999 JP 31458199**

(71) Applicant: **SONY CORPORATION**
**Tokyo (JP)**

(72) Inventor:
**Hirayama, Tomoshi,**
**c/o Sony Corporation**
**Tokyo (JP)**

(74) Representative:
**Melzer, Wolfgang, Dipl.-Ing. et al**
**Patentanwälte**
**Mitscherlich & Partner,**
**Sonnenstrasse 33**
**80331 München (DE)**

(54) **Information processing apparatus and method and recording medium**

(57)    The present invention determines the prices of intangibles such as music data. An exposures computing system accesses Web servers via the Internet to detect the number of exposures of information about specified music data. A demand computing system accesses the Web servers via the Internet to search for the number of sales and the number of reservations of that music data and computes a demand on the basis of the retrieved information. On the basis of the obtained number of exposures and the obtained demand, a pricing index computing system computes a pricing index by which the price of the music data is determined.

F I G.1

EP 1 098 261 A2

**Description**

BACKGROUND OF THE INVENTION

The present invention relates generally to an information processing apparatus, an information processing method, and a recording medium and, more particularly, to an information processing apparatus, an information processing method, and a recording medium capable of computing pricing indexes that form the foundation of prices of such services which can be electronically duplicated as audio and video information and computer programs.

Recently, network systems represented by the Internet have been increasingly gaining in popularity, offering the means for providing a variety of services. For example, audio and video information and computer programs (hereafter simply referred to as AV information) can be transferred through networks and users can quickly and reliably receive these pieces of AV information supplied through networks.

As one of these service providing means, computation of amounts billed by compiling viewing times and fees of particular services is known as disclosed in Japanese Published Unexamined Patent Application No. Hei 11-112960.

Generally, the prices of commercial products are determined by the balance between demand and supply. However, such intangible commercial products as the above-mentioned AV information, or so-called content, can be electronically duplicated and the number of replications is theoretically infinite. Therefore, the supply of content is infinite so to speak, thereby making it difficult to determine its prices simply from the relationship between supply and demand.

SUMMARY OF THE INVENTION

It is therefore an object of the present invention to provide an information processing apparatus, an information processing method, and a recording medium that are capable of computing pricing indexes on the basis of which intangible content can be priced.

In carrying out the invention and according to one aspect thereof, there is provided a first information processing apparatus comprising: first computing means for computing the number of exposures of information about a service in a network; second computing means for computing a demand for the service in the network; and third computing means for computing a pricing index for the service on the basis of the number of exposures computed by the first computing means and the demand computed by the second computing means.

The above-mentioned service includes electronically reproducible information.

The above-mentioned first computing means weights the number of exposures in a commercial network of the network and the number of exposures in a non-commercial network of the network with different values to compute the number of exposures in the network.

The above-mentioned second computing means weights the number of sales and the number of reservations of the service with different values to compute the demand in the network.

The above-mentioned third computing means has a plurality of functions composed of a linear function and a nonlinear function for computing the pricing index of the service on the basis of the number of exposures and the demand of the service and selects one of the plurality of functions to compute the pricing index of the service.

In carrying out the invention and according to another aspect thereof, there is provided a first information processing method comprising the steps of: computing the number of exposures of information about a service in a network; computing a demand for the service in the network; and computing a pricing index for the service on the basis of the number of exposures computed in the first computing step and the demand computed in the second computing step.

In carrying out the invention and according to still another aspect thereof, there is provided a first recording medium recording a computer-readable program comprising the steps of: computing the number of exposures of information about a service in a network; computing a demand for the service in the network; and computing a pricing index for the service on the basis of the number of exposures computed in the first computing step and the demand computed in the second computing step.

In carrying out the invention and according to yet another aspect thereof, there is provided a second information processing apparatus comprising: first computing means for computing, on the basis of the number of exposures and a demand of information about a service in a first network, a pricing index of the service; second computing means for computing a pricing index of the service on the basis of the number of exposures and a demand of the information about the service in a second network; and third computing means for computing a global pricing index of the service on the basis of the pricing index of the service computed by the first computing means and the pricing index of the service computed by the second computing means.

The second information processing apparatus further comprising changing means for changing a function for computing the pricing index of the service computed by the first computing means and a function for computing the pricing index of the service computed by the second computing means on the basis of the global pricing index of the service computed by the third computing means.

The above-mentioned service includes electronically reproducible information.

The first computing means and the second computing means weight, with different values, the number of exposures in a commercial network and the number of exposures in a non-commercial network of the first network and the second network to compute the number of exposures in the first network and the number of exposures in the second network.

The first computing means and the second computing means weight the number of sales and the number of reservations of the service with different values to compute the demand in the first network and the demand in the second network.

The third computing means has a plurality of functions composed of a linear function and nonlinear function for computing the pricing index of the service on the basis of the number of exposures and the demand of the service and selects one of the plurality of functions to compute the pricing index of the service.

In carrying out the invention and according to a different aspect thereof, there is provided a second information processing method comprising the steps of: computing, on the basis of the number of exposures and a demand of information about a service in a network, a pricing index of the service; computing a pricing index of the service on the basis of the number of exposures and a demand of the information about the service in a second network; and computing a global pricing index of the service on the basis of the pricing index of the service computed in the first computing step and the pricing index of the service computed in the second computing step.

In carrying out the invention and according to still different aspect thereof, there is provided a second recording medium recording a computer-readable program comprising the steps of: computing, on the basis of the number of exposures and a demand of information about a service in a first network, a pricing index of the service; computing a pricing index of the service on the basis of the number of exposures and a demand of the information about the service in a second network; and computing a global pricing index of the service on the basis of the pricing index of the service computed in the first computing step and the pricing index of the service computed in the second computing step.

In the first information processing apparatus, the first information processing method, and the first program recording medium, the number of exposures of information about a service in a network is computed along with a demand for it and, on the basis of the computed number of exposures and demand, a pricing index for the service is computed.

In the second information processing apparatus, the second information processing method, and the second program recording medium, a pricing index computed on the basis of the number of exposures and demand of a service in a first network and a pricing index computed on the basis of the number of exposures and demand of the service in a second network are used to compute a global pricing index of the service.

BRIEF DESCRIPTION OF THE DRAWINGS

These and other objects of the invention will be seen by reference to the description, taken in connection with the accompanying drawing, in which:

FIG. 1 is a block diagram illustrating an exemplary configuration of a network system practiced as one embodiment of the invention;
FIG. 2 is a block diagram illustrating an exemplary configuration of a exposures computing system shown in FIG. 1;
FIG. 3 is a block diagram illustrating an exemplary configuration of an demand computing system shown in FIG. 1;
FIG. 4 is a block diagram illustrating an exemplary configuration of a pricing index computing system shown in FIG. 1;
FIG. 5 is a flowchart describing exposures computing processing executed by the exposures computing system shown in FIG. 2;
FIG. 6 is a flowchart describing demand computing processing executed by the demand computing system shown in FIG. 3;
FIG. 7 is a flowchart describing pricing index computing processing executed by the pricing index computing system shown in FIG. 4;
FIG. 8 is a block diagram illustrating an exemplary configuration of a network system practiced as another embodiment of the invention;
FIG. 9 is a block diagram illustrating an exemplary configuration of a meta pricing agent shown in FIG. 8;
FIG. 10 is a flowchart describing an operation of the meta pricing agent shown in FIG. 8;
FIG. 11 is a flowchart describing processing by the meta pricing agent shown in FIG. 9; and
FIG. 12 is a block diagram illustrating an exemplary configuration of hardware of the pricing index computing system.

DETAILED DESCRIPTION OF PREFERRED EMBODIMENTS

This invention will be described in further detail by way of example with reference to the accompanying drawings.

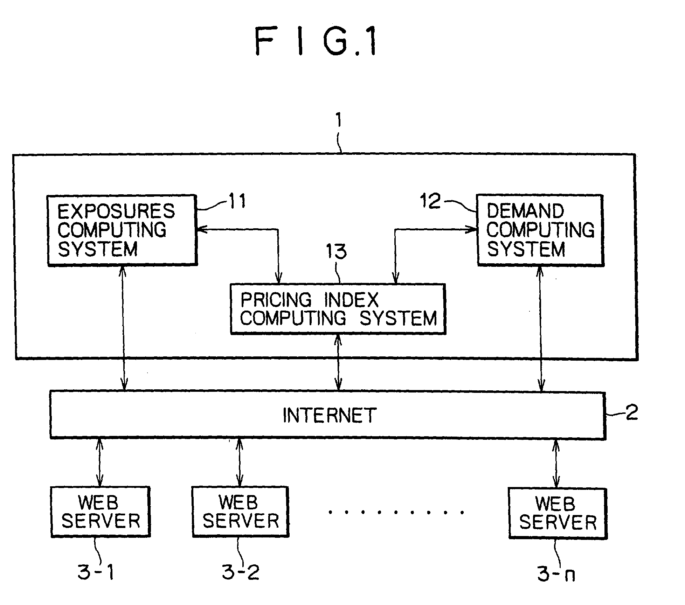

Now, referring to FIG. 1, there is shown a configuration of a network system practiced as one embodiment of the present invention. In this configuration, a pricing agent 1 is connected to Web servers 3-1 through 3-n via the Internet 2. The pricing agent 1 comprises an exposures computing system 11, an demand computing system 12, and a pricing index computing system 13. It should be noted that, in the network system shown in FIG. 1, a pricing index is computed for music as one of services.

The exposures computing system 11 is connected to the Internet 2 and computes the number of exposures, on the Web servers 3-1 through 3-n (hereafter referred to generically as the Web server 3 unless the distinction among them is required, which holds the same with the other devices), of information associated with music specified for processing. The demand computing system 12 accesses the Web server 3 via the Internet 2 to search for the volume of sale of music and the number of reservations of music. On the basis of these data, the demand computing system 12 computes amounts demanded. The pricing index computing system 13 computes a pricing index which provides a reference for determining the price of a particular piece of music on the basis of the number of exposures computed by the exposures computing system 11 and the amount demanded computed by the demand computing system 12. In addition, the pricing index computing system 13 is connected to the Internet 2 and accesses the Web server 3 to uniquely retrieve various types of information.

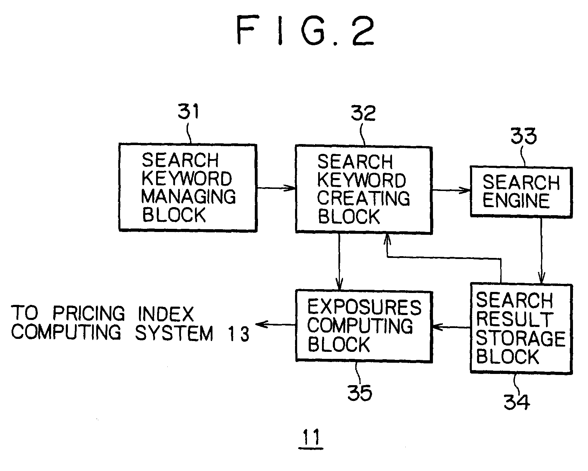

The exposures computing system 11 is configured as shown in FIG. 2 for example. A search keyword managing block 31 has a database storing information including such items as music title, composer name, songwriter name, performer name, publisher name, record company name, lyrics, date of sale, production name, record number, music control number, country name, genre name, and free setting keyword. A search keyword creating block 32 selects a word group corresponding to an appropriate item from the search keyword managing block 31 in order to retrieve the number of exposures of a specified music title (or content) on the Web and inserts sum and product operators between the words, creating a search keyword. In addition, the search keyword creating block 32 evaluates a search result supplied from a search result storage block 34 to determine whether the created search keyword is reasonable or not. Then, on the basis of the evaluation result, the search keyword creating block 32 modifies a search keyword creating rule.

A search engine 33 checks the contents of the Web server 3 located on the Internet 2 and searches for a character string that matches the search keyword. Then, the search engine 33 retrieves a URL (Uniform Resource Locator) to which the retrieved character string belongs. A search result storage block 34 stores information indicative of a result of a search operation executed by the search engine 33, for example, information indicative at which category of site a predetermined music title is placed and how many. The category herein denotes commercial (for sale), non-commercial (not for sale), area, network on the way, and date for example. The search result storage block 34 also stores information about date on which each search operation was executed.

An exposures computing block 35 computes the number of exposures of a specified music title (or content) on the network (including sites and nodes connected thereto) on the basis of the search result stored in the search result storage block 34. The number of exposures herein denotes a sum of values obtained by multiplying the number of hits (the number of appearances in the network) for each category by a predetermined weighting factor. The number of exposures is computed for a predetermined date or for each period covered. The number of exposures thus computed by the exposures computing block 35 is supplied to the pricing index computing system 13.

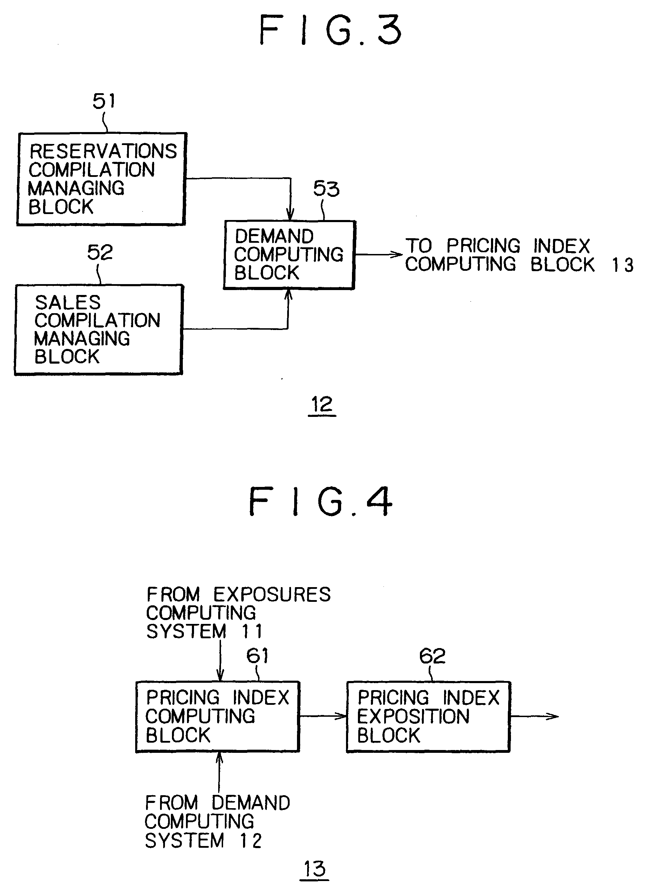

The demand computing system 12 is configured as shown in FIG. 3 for example. A reservations compilation managing block 51 accesses retail sales sites constituted by the Web server 3 to compile the number of reservations of content in a physical and logical predetermined area, supplied via a predetermined network, and on a predetermined date. These retail sales sites include those which only send out questionnaire about their content and do not sell their content.

A sales compilation managing block 52 compiles the number of sales of content in a physical and logical predetermined area, supplied from a predetermined network and on a predetermined date. A demand computing block 53 weights the number of reservations compiled by the reservations compilation managing block 51 and the number of sales compiled by the sales compilation managing block 52 by a predetermined factor and computes a sum of the obtained values as an amount demanded. The computed demand is supplied to the pricing index computing system 13.

FIG. 4 shows an exemplary configuration of the pricing index computing system 13. A pricing index computing block 61 applies a predetermined function to the number of exposures supplied from the exposures computing system 11 and the amount demanded supplied from the demand computing system 12 to compute a pricing index. A pricing index exposition block 62 exposes (or provides) for value the pricing index computed by the pricing index computing block 61 to a third party (for example, a seller of that content) who wants to determine the price of that content.

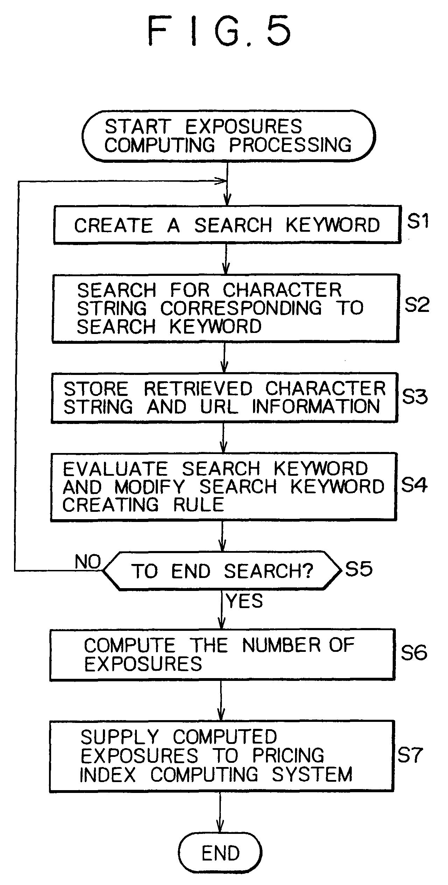

The following describes the exposures computing processing to be executed by the exposures computing system 11 with reference to the flowchart shown in FIG. 5. First, in step S1, the search keyword creating block 32 selects a word group corresponding to an object music title (or content) from the keyword stored in the search keyword managing block 31 and connect the selected words with sum and product operators to create a search keyword and outputs the created keyword to the search engine 33. In step S2, the search engine 33 searches for a character string corresponding to the search keyword supplied from the search keyword creating block 32. To be more specific, the search engine 33 accesses the Web server 3 via the Internet 2 to search for the character string corresponding to the search keyword and gets the information of an URL to which the retrieved character string belongs. In step S3, the search result storage block 34 stores the search results such as the character string and the URL information retrieved by the search engine 33.

The search keyword creating block 32 reads the search results from the search result storage block 34, evaluates the search keyword, and modifies the rule of creating the search keyword. For example, if the search results contain too many noises, the search keyword creating block 32 adds a condition for eliminating the noises. If the number of search results is too small, the search keyword creating block 32 newly adds words to provide appropriate search results.

In step S5, the search keyword creating block 32 determines whether an appropriate search result has been obtain, or whether to end the search or not. If the search operation is to be repeated, then, the search keyword creating block 32 returns to step S1 to repeat the above-mentioned processes. If an appropriate result is found in step S5 and therefore the search operation is to be ended, the search keyword creating block 32 notifies the exposures computing block 35 thereof. In step S6, the exposures computing block 35 reads the search results from the search result storage block 34 to compute the number of exposures. As described, the number of exposures is computed as a sum of values obtained by multiplying the number of hits in each category by a predetermined weighting factor. In step S7, the exposures computing block 35 outputs the number of computed exposures to the pricing index computing system 13.

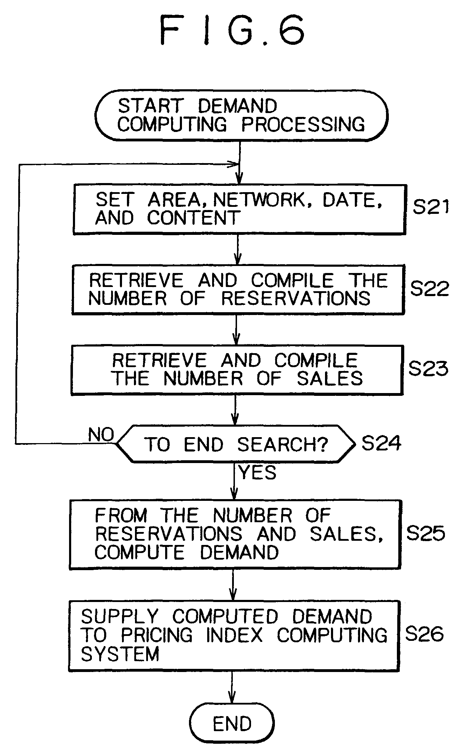

The following describes the demand computing processing to be executed by the demand computing system 12 with reference to the flowchart shown in FIG. 6. In step S21, the reservations compilation managing block 51 and the sales compilation managing block 52 each set area, network, date, and content for which an amount demanded is to be computed. In step S22, the reservations compilation managing block 51 accesses the Web server 3 via the Internet 2 to retrieve and compile the number of reservations of that content in that area, on that network, and on that date. Likewise, the sales compilation managing block 52 retrieves and compiles the number of sales of that content in that area, on that network, and on that date in step S23.

The demand computing block 53 receives the number of reservations obtained by the reservations compilation managing block 51 and the number sales obtained by the sales compilation managing block 52 and determines whether the number of reservations and the number of sales enough for computing an amount demanded have been obtained or not. On the basis of this determination, the demand computing block 53 determines whether to end the search or not in step S24. If the decision is no, then the demand computing block 53 returns to step S21 to repeat the above-mentioned processes. If the decision is yes in step S24, then the demand computing block 53 goes to step S25 computes, from the received numbers of reservations and sales, an amount demanded of that content, in that area, on that network, and on that date. This amount demanded is computed as a sum of values obtained by weighting the number of reservations and the number of sales by a predetermined factor. In step S26, the demand computing block 53 outputs the amount demanded obtained in step S25 to the pricing index computing system 13.

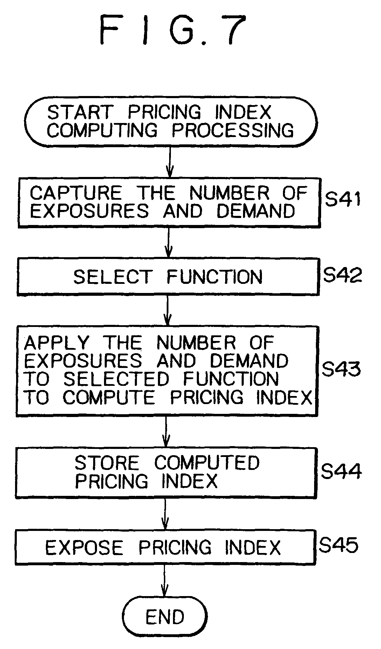

The following describes the pricing index computing processing to be executed by the pricing index computing system 13 with reference to the flowchart shown in FIG. 7. In step S41, the pricing index computing block 61 captures the number of exposures from the exposures computing system 11 and, at the same time, an amount demanded from the demand computing system 12. Then, in step S42, the pricing index computing block 61 selects one of a plurality of pricing functions (for example, linear and nonlinear pricing functions to be described later). In step S43, the pricing index computing block 61 applies the number of exposures and the amount demanded to the selected pricing function to compute a pricing index.

The pricing index computed by the pricing index computing block 61 is supplied to the pricing index exposition block 62 to be stored in step S44. In step S45, the stored pricing index is exposed to third parties by the pricing index exposition block 62.

The following describes a specific example of a pricing index. Let the number of exposures associated with predetermined piece of music content be EXP and the number of persons who want to purchase this content (namely, an amount demanded) be NEED. In addition, let the reference price of that content be SRP and the sale price (namely, a pricing index) of the content be Going.

If the balance between the number of exposures EXP and the amount demanded NEED is within a certain range, it is considered that the pricing index Going is equal to the reference price SRP. Generally, if the number of exposures EXP exceeds the amount demanded NEED, it is an excess supply, so that pricing index Going is smaller than reference price SRP. On the contrary, if the number of exposures EXP goes below the amount demanded NEED, it is a supply shortage, so that the pricing index Going becomes greater than the reference price SRP.

The following describes an example of computing pricing index Going by applying a linear function to the number of exposures EXP and the amount demanded NEED on the basis of the above-mentioned principles.

In this example, the linear pricing function is defined as expressed by the following equation:

$$Going = SRP \times F(NEED, EXP)$$

where, F is expressed by the following equation:

$$F = (NEED/ExP) \times 0.05.$$

Applying the above-mentioned equation, if 100 persons want that particular content and five persons sell that content, then the above-mentioned value F becomes 1 as expressed by the following equation.

$$F = (100/5) \times 0.05 = 1.$$

Consequently, at this time, the pricing index Going is equal to the reference price SRP.

If 200 persons want that particular content and five persons sell that content, F value becomes 2 as expressed by the following equation:

$$F = (200/5) \times 0.05 = 2.$$

Consequently, in this case, the pricing index Going becomes twice of the reference price SRP.

If one person wants and five persons sell, the above-mentioned value F becomes 0.01 as shown below:

$$F = (1/5) \times 0.05 = 0.01.$$

Therefore, in this case, the pricing index Going becomes one percent of the reference price SRP.

Thus, when a linear function is applied, the pricing index remarkably goes up or down corresponding to the number of exposures and the amount demanded. To suppress this, the application of a nonlinear function is possible as follows.

$$Going = SRP + G (NEED, EXP) \times SRP = SRP (1 + G(NEED, EXP)),$$ where G value is expressed by the following equation:

$$G = (\sqrt{((NEED/EXP) \times 0.05)} - 5)/10.$$

If NEED is 10000 and EXP is 5, then G value becomes 0.5 as expressed by the following equation:

$$G = (\sqrt{((1000/5) \times 0.05)} - 5)/10 = (10 - 5)/10 = 5/10 = 0.5.$$

Consequently, in this case, the pricing index Going is 1.5 (= 1 + 0.5) times of the SRP.

On the other hand, if the value of NEED is 1 and the value of EXP is 5, then the value G becomes -0.49 as expressed by the following equation:

$$G = (\sqrt{((1/5 \times 5/100)} - 5)/10 = (1/10 - 5)/10 = - 4.9/10 = -0.49.$$

Consequently, in this case, the pricing index Going becomes 0.51 (= 1 - 0.49) times of the reference price SRP.

It should be noted that the above-mentioned computation processes by use of functions may be executed every time the computation becomes necessary or by referencing a prepared table and reading results therefrom.

The following describes the weighting of the number of exposures. If it is attempted to obtain a sum of the number of commercial (sale-site) exposures and the number of non-commercial (hobby-site) exposures without weighting them, the correct number of exposures cannot always be obtained. Therefore, weighting is done as follows.

For example, let the number of commercial exposures be EXPSell and the number of non-commercial exposures be EXPHobby. Weighting function H is applied to EXPSell and weighting function I is applied to EXPHobby. Let the sum of them be the number of exposures EXP in the above-mentioned linear weighting function or nonlinear weighting function, then EXP is expressed by the following equation:

$$EXP = H(EXPSell) + I(EXPHobby).$$

For example, if the EXPSell is weighted by 100 as compared with the EXPHobby, the EXP is expressed by the following equation:

$$EXP = 100 \times EXPSell + EXPHobby.$$

Obviously, this weighting may be applied to the number of exposures at three or more sites.

As for the amount demanded, weighting may be practiced in the like manner. Let the total number of content items already sold in a predetermined period be NEEDSold and the total number of reserved content items be NEEDBook. Function J is applied to the NEEDSold and function K is applied to the NEEDBook. Then, the value of NEED weighted by the above-mentioned linear pricing function or nonlinear pricing function is expressed by the following equation:

$$NEED = J(NEEDSold) + K(NEEDBook).$$

If the demand actually sold is weighted by 10 as compared with the demand by reservation which may be canceled, the demand NEED is expressed by the following equation:

$$NEED = 10 \times NEEDSold + NEEDBook.$$

Obviously, in this case, the weighting may be practiced to the demands at three or more sites.

Further, the weighting may be practiced for area and network. For example, let the number of exposures in a low-demand area (countryside) be EXPCountry, EXPSellCountry and EXpHobbyCountry, the demand in low-demand area be NEEDCountry, NEEDSoldCountry and NEEDBookCountry, the number of exposures in a high-demand area (city) be EXPUrban, EXPSellUrban and EXPHobbyUrban, and the demand in high-demand area be NEEDUrban, NEEDSoldUrban, and NEEDBookUrban. Then, a predetermined weighting function may be applied to each of these.

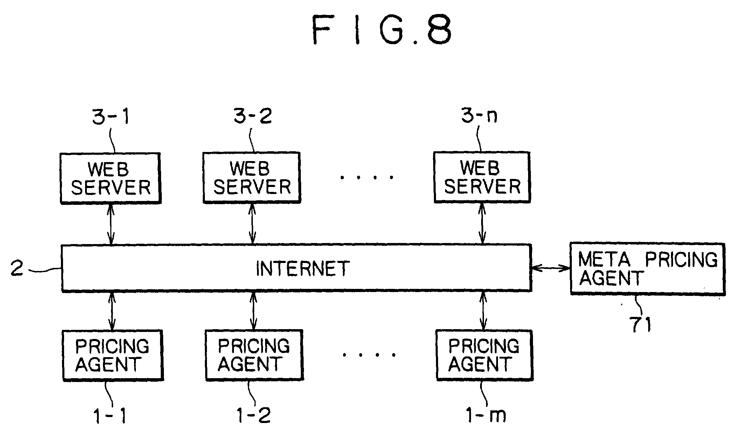

The above-mentioned pricing agents 1 may be placed for every predetermined country, area, and region. In this case, a global pricing index obtained by integrating these may be computed. FIG. 8 shows an exemplary configuration of a network system for the global pricing indexing. In this configuration, the Internet 2 is connected to pricing agents 1-1 through 1-m and a meta pricing agent 71. The meta pricing agent collects the pricing indexes of the pricing agents 1-1 through 1-m and integrates the collected pricing indexes into a global pricing index.

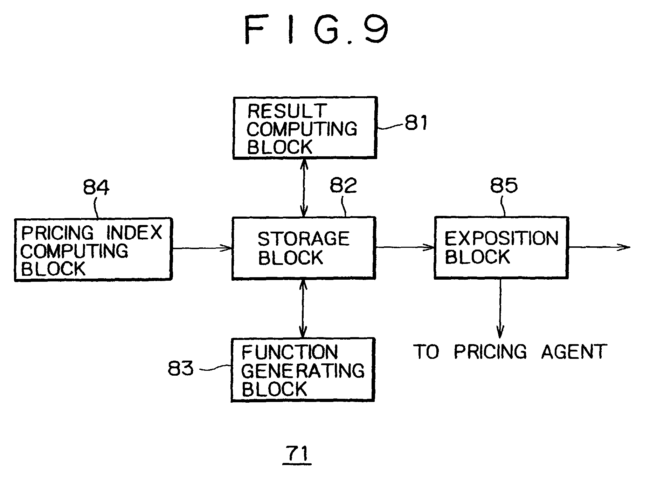

FIG. 9 shows an exemplary configuration of the meta pricing agent 71. A storage block 82 stores the pricing indexes supplied from the pricing agents 1-1 through 1-m via the Internet 2 along with the number of users, content distribution volume, and content usage (reproduction) amount of each pricing agent. A result computing block 81 computes results of the pricing agents 1-1 through 1-m stored in the storage block 82 in a predetermined period and stores the obtained results in the storage block 82. A function generating block 83 generates a performance evaluation function for evaluating the performance of the pricing agents 1 on the basis of the results computed by the result computing block 81. In addition, the function generating block 83 generates a new pricing function on the basis of data supplied from each pricing agent and stores the generated new pricing function in the storage block 82.

An exposition block 85 reads from the storage block 82 the results obtained by the result computing block 81, the pricing functions generated by the function generating block 83, and, as required, the performance evaluation functions and supplies them to the pricing agents 1-1 through 1-m. A pricing index computing block 84 reflects the pricing function generated by the function generating block 83 and stored in the storage block 82 onto the pricing index computing process to be executed by the meta pricing agent 71 itself, thereby executing the pricing index computing processing. This processing is generally the same as the processing to be executed by the pricing index computing block 61 of the pricing agent 1.

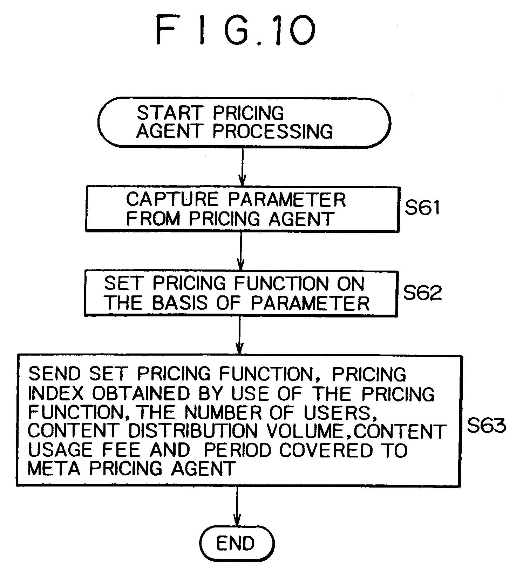

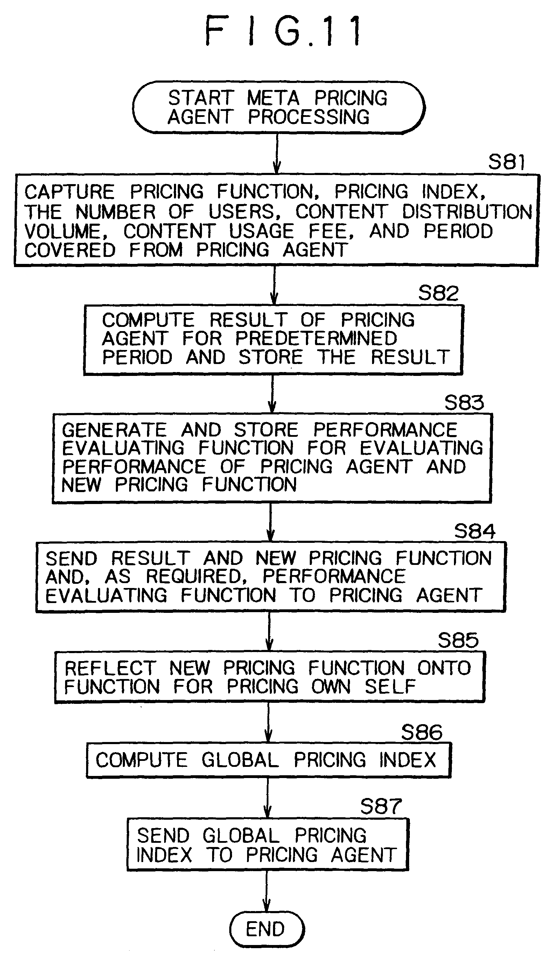

The following describes the processing in the network system shown in FIG. 8 with reference to the flowcharts shown in FIGS. 10 and 11. The flowchart shown in FIG. 10 indicates the processing by the pricing agent 1. The flowchart shown in FIG. 11 indicates the processing by the meta pricing agent 71.

First, the processing by the pricing agent 1 shown in FIG. 10 will be described. In step S61, the pricing index computing block 61 of the pricing agent 1 captures various parameters supplied from the exposition block 85 of the meta pricing agent 71. These parameters include the results, new pricing functions, performance evaluation functions, and global pricing index to be transmitted by the meta pricing agent 71 in steps S84 and S87 to be described later. In step S62, on the basis of the parameters captured in step S61, the pricing index computing block 61 sets a pricing function for computing a pricing index. Then, by use of the pricing function, the pricing index computing block 61 executes the pricing index computing process as described above.

In step S63, the pricing index computing block 61 sends the set pricing function, the pricing index obtained by use of this pricing function, the number of users, content distribution volume, content usage fee, and a period covered to the meta pricing agent 71.

On the other hand, the storage block 82 of the meta pricing agent 71 stores the pricing functions, pricing indexes, the number of users, content distribution volumes, content usage fees, and periods covered supplied from the pricing agents 1-1 through 1-m. In step S82, the result computing block 81 compares the relationship between the number of users and the content distribution volume of a predetermined pricing agent with the relationship in other pricing agents and compares this relationship between periods covered, thereby computing the result in the predetermined period covered in each pricing agent. The obtained results are stored in the storage block 82.

The following describes the result of the pricing agent 1. The role of the pricing agent 1 is an antiquarian appraiser for example. Namely, the pricing agent 1 assigns market value to commercially available goods (or services). The result of the pricing agent 1 playing such a role can be determined by the distribution volume of that good (or service) in the pricing index (or price) set by that pricing agent 1.

Alternatively, the result may be determined from the viewpoint whether a piece of music sold with the set pricing index has been actually used or not. For example, if digital content data of music is encrypted and distributed through the Internet 2, actually listening to the distributed music data requires a key for decrypting the encrypted data. Consequently, the result can be determined by the distribution amount of such a key. In this case, the meta pricing agent 71 connects to a key managing center that distributes keys and evaluates the result on the basis of the data supplied from the center.

Alternatively still, if a predetermined piece of music is set with pricing index A by the first pricing agent 1 and pricing index B by the second pricing agent 1, the pricing agent having a greater number of uses as the actual sales price of that music data can be evaluated the better result.

Alternatively yet, a standard deviation of actual transaction prices including various values is taken and to which one of the pricing index A and the pricing index B the standard deviation is closer is statistically checked to regard the closer pricing index as the better result.

The obtained result may also be weighted. For example, assume that the population of market a covered by a pricing agent presenting pricing index A be 1,000,000 and the population of market b covered by a pricing agent presenting pricing index B be 10,000. In addition, assume that the number of people who actually made transactions with the pricing index A be 200 and the number of people who actually made transactions with the pricing index B be 100. It is supposed here that no transactions with any other pricing indexes have been made. In this example, the pricing agent covering market a provides a better result. However, when the ratio to population is considered, the accuracy of the pricing agent presenting pricing index is 200/1,000,000 while the accuracy of the pricing agent presenting pricing index B is 100/10,000. Therefore, in this case, the result of the pricing agent set with pricing index B is 50 times as high as the result of the pricing agent set with pricing index A.

The present embodiment uses an example of music data distribution. With a same pricing agent, the result it provides may vary according to service categories provided. For example, a same pricing agent may be excellent in video information pricing but not excellent in music information pricing. With music information, the result may also differ from genre to genre such as classical, jazz, and rock.

Consequently, both the results of categories and a result obtained by integrating them may be obtained. This provides more accurate result evaluations.

The categorization may also be made not from the viewpoint of service providers but from viewpoint of service recipients. For example, the result may be computed in terms of age, gender, and vocation. This allows to compute the results for age categories such as under 20, 20 to 40, and over 40 and compares the obtained results to obtain features such as that the result is excellent in younger generation while it is not in older generation for example. It may also happen that a good result was obtained between different sexes, while the result among only females was not always good.

Consequently, performance differences of each pricing agent between categories may be detected as a result. For example, determination may be made that, as for the music targeted to male customers, the first pricing agent presents a pricing index with which business negotiation is easy (namely, the result is good) but, as for preserved foods, the first pricing agent presents a pricing index with which business negotiation is difficult, leading to a poor result.

In step S83, on the basis of the data about each pricing agent 1 stored in the storage block 82, the function generating block 83 generates a performance evaluation function for evaluating the performance of each pricing agent and a new pricing function with result considered to provide a better result. The generated performance evaluation function and pricing function are stored in the storage block 82.

The performance evaluation function herein denotes the ratios of purchasers 200/1,000,000 and 100/10,000 for example in the markets with populations considered. This performance evaluation function is set to every predetermined measurement period. Namely, the setting period provides one of the function parameters. Therefore, extending and shortening the period modify the performance evaluation function.

In step S84, the exposition block 85 sends the result, new pricing function, and, as required, performance evaluation function of every pricing agent 1 stored in the storage block 82 to every pricing agent 1 via the Internet 2. As described above, each pricing agent 1 captures these data as parameters in step S61 and sets a pricing function on the basis of these parameters in step S62, computing the pricing index on the basis of this pricing function. The performance evaluation function is used to evaluate the performance of each pricing agent.

It should be noted that each pricing agent considers the characteristics of own processing area (namely, the characteristics for each area or each network) and, if the pricing functions supplied from the meta pricing agent 71 include any parameter that can be changed unconditionally, adjusts that parameter to set a pricing function suitable for own processing range. Each pricing agent, if its result is good, is allowed not to use the pricing function supplied from the meta pricing agent 71 but use the pricing function already used by itself without change.

Each pricing agent can weight the pricing function in accordance with an area covered by itself to modify the pricing function. For example, in a network covered by itself, if the ratio of commercial agents is higher than in the other networks, the amount of commercial demand may be lowered in weight as compared with the amount of non-commercial demand for the determination of the amount demanded.

Specifically, in this case, $H = EXPSell \times 100$ and $I = EXPHobby$ can be changed to $H = EXPSell \times 100$ and $I = EXPHobby \times 5$. This relatively makes the weight for EXPSell lighter than the weight for EXPHobby.

Likewise, the meta pricing agent 71 executes the processing in the pricing index computing block 84 so as to reflect the pricing function onto the function for pricing itself in step S85. In step S86, the pricing index computing block 84 computes a global pricing index on the basis of the pricing indexes of the pricing agents 1. To be more specific, the pricing index of each of the pricing agents 1-1 through 1-m is weighted with a predetermined factor and a sum of the pricing indexes is obtained. An average of these pricing indexes is computed as a global pricing index. In step S87, the exposition block 85 sends to each pricing agent 1 the global pricing index computed by the pricing index computing block 84 and stored in the storage block 82. On the basis of this global pricing index, each pricing agent modifies its pricing index again. Obviously, the global pricing index thus computed is exposed to third parties for value.

Thus, third parties can obtain the pricing indexes for area, country, and region and a global pricing index as required to determine specific sales prices.

In addition, by use of not only the conditions of area, region and country of each pricing agent 1 but also global conditions, each pricing agent 1 can compute the pricing indexes in the area, region and country of itself. This provides more accurate pricing indexes.

Thus, substantially, in the present invention, the number of exposures on a network is computed as supply amounts of services (or digital content) such as the audio information, video information, and computer programs that can be electronically duplicated infinitely. Consequently, the pricing indexes for these services can be computed accurately.

It should be noted that the Internet 2, which is the network system shown in FIG. 8, may be connected to a system as disclosed in Japanese Patent Laid-open No. Hei 11-196113 for determining the prices of tangibles, in which the meta pricing agent 71 appropriately gathers information from this system to compute a global pricing index.

The above-mentioned embodiment has been described by use of an example in which music pricing indexes are computed. The present invention is not limited to this example. The present invention is applicable to any case in which the pricing indexes are computed for various electronically reproducible services of which supply amounts cannot be determined in the concept tangibles.

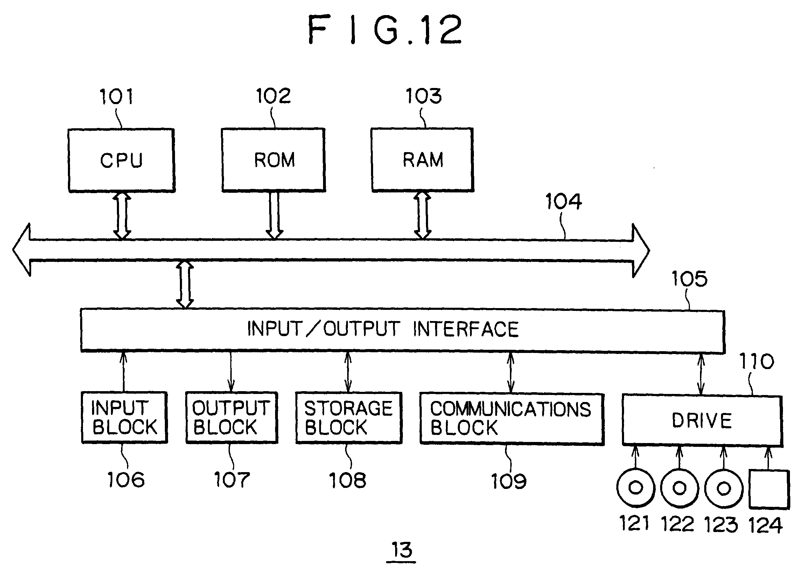

The exposures computing system 11, the demand computing system 12 and the pricing index computing system 13 in each pricing agent 1, the search keyword managing block 31, the search keyword creating block 32, the search engine 33, search result storage block 34 and the exposures computing block 35 of the exposures computing system 11, the reservations compilation managing block 51, the sales compilation managing block 52, and the demand computing block 53 of the demand computing system 12, the pricing index computing block 61 and the pricing index exposition block 62 of the pricing index computing system 13, and the result computing block 81, the storage block 82, the function generating block 83, the pricing index computing block 84, and the exposition block 85 of the meta pricing agent 71 each can be constituted by a computer totally or partially. For example, if the pricing index computing system 13 is constituted by a computer, its configuration becomes as shown in FIG. 12.

A CPU 101 executes various processes according to programs stored in a ROM 102 or a storage block 108. A RAM 103 stores programs and data necessary for the CPU 101 to execute various processes. The CPU 101, the ROM 102, and the RAM 103 are interconnected through a bus 104 and through an input/output interface 105. The input/output interface 105 is connected to an input block 106 having a keyboard and a mouse for example, an output block 107 having an LCD, a CRT, and a speaker for example, a storage block 108 constituted by a hard disk for example, and a communications block for supporting communication with the Internet 2.

The input/output interface 105 is also connected to a drive 110 for program installation, on which a magnetic disk 121, an optical disk 122, a magneto-optical disk 123, or a semiconductor memory 124 is loaded. The above-mentioned various processes are executed by the CPU 101 in accordance with the instructions written in programs (or software).

The above-mentioned sequence of processes can be executed in both hardware and software approaches. For the execution by software, the programs constituting the software are installed from a recording medium into a computer incorporated in dedicated hardware or a general-purpose personal computer for example by which various processes can be executed by installing necessary programs.

This recording medium is a package medium constituted by the magnetic disk 121 (including floppy disk), the Optical disk 122 (including CD-ROM (Compact Disk Read Only Memory) and DVD (Digital Versatile Disk)), the magneto-optical disk 123 (including MD (Mini-Disk)), or the semiconductor memory 124 or the recording medium is constituted by the ROM 102 or the hard disk included in the storage block 108 in which recorded beforehand for users.

The steps describing the programs provided by the above-mentioned recording medium include not only processes which are executed in the described sequence in a time-seires manner but also processes which are executed in parallel or discretely.

It should be noted that term "system" herein denotes an entire apparatus constituted by a plurality of devices.

As described and according to the first information processing apparatus, information processing method, and the programs recorded on a recording medium associated with the invention, the number of exposures in a network of service-related information is computed and, on the basis of the obtained number of exposures and amount demanded, service pricing indexes are computed. Consequently, the pricing indexes associated with services as intangibles can be computed correctly and quickly.

As described and according the second information processing apparatus, information processing method, and programs recorded on a recording medium associated with the invention, a global pricing index is computed on the basis of a plurality of pricing indexes. Consequently, global pricing indexes can be computed correctly and quickly without being affected by regionality.

While the preferred embodiments of the present invention have been described using specific terms, such description is for illustrative purposes only, and it is to be understood that changes and variations may be made without departing from the spirit or scope of the appended claims.

**Claims**

1.  An information processing apparatus comprising:

    first computing means for computing the number of exposures of information about a service in a network;

    second computing means for computing a demand for said service in said network; and

    third computing means for computing a pricing index for said service on the basis of said number of exposures computed by said first computing means and said demand computed by said second computing means.

2.  The information processing apparatus according to claim 1, wherein said service includes electronically reproducible information.

3.  The information processing apparatus according to claim 1, wherein said first computing means weights said number of exposures in a commercial network of said network and said number of exposures in a non-commercial network of said network with different values to compute said number of exposures in said network.

4.  The information processing apparatus according to claim 1, wherein said second computing means weights the number of sales and the number of reservations of said service with different values to compute said demand in said network.

5.  The information processing apparatus according to claim 1, wherein said third computing means has a plurality of functions composed of a linear function and a nonlinear function for computing said pricing index of said service on the basis of said number of exposures and said demand of said service and selects one of said plurality of functions to compute said pricing index of said service.

6.  An information processing method comprising the steps of:

    computing the number of exposures of information about a service in a network;

    computing a demand for said service in said network; and

computing a pricing index for said service on the basis of said number of exposures computed in the first computing step and said demand computed in the second computing step.

7. A recording medium recording a computer-readable program, said program comprising the steps of:

computing the number of exposures of information about a service in a network;

computing a demand for said service in said network; and

computing a pricing index for said service on the basis of said number of exposures computed in the first computing step and said demand computed in the second computing step.

8. An information processing apparatus comprising:

first computing means for computing, on the basis of the number of exposures and a demand of information about a service in a first network, a pricing index of said service;

second computing means for computing a pricing index of said service on the basis of the number of exposures and a demand of said information about said service in a second network; and

third computing means for computing a global pricing index of said service on the basis of said pricing index of said service computed by said first computing means and said pricing index of said service computed by said second computing means.

9. The information processing apparatus according to claim 8, further comprising:

changing means for changing a function for computing said pricing index of said service computed by said first computing means and a function for computing said pricing index of said service computed by said second computing means on the basis of said global pricing index of said service computed by said third computing means.

10. The information processing apparatus according to claim 8, wherein said service includes electronically reproducible information.

11. The information processing apparatus according to claim 8, wherein said first computing means and said second computing means weight, with different values, said number of exposures in a commercial network and said number of exposures in a non-commercial network of said first network and said second network to compute said number of exposures in said first network and said number of exposures in said second network.

12. The information processing apparatus according to claim 8, wherein said first computing means and said second computing means weight the number of sales and the number of reservations of said service with different values to compute said demand in said first network and said demand in said second network.

13. The information processing apparatus according to claim 8, wherein said third computing means has a plurality of functions composed of a linear function and nonlinear function for computing said pricing index of said service on the basis of said number of exposures and said demand of said service and selects one of said plurality of functions to compute said pricing index of said service.

14. An information processing method comprising the steps of:

computing, on the basis of the number of exposures and a demand of information about a service in a first network, a pricing index of said service;

computing a pricing index of said service on the basis of the number of exposures and a demand of said information about said service in a second network; and

computing a global pricing index of said service on the basis of said pricing index of said service computed in the first computing step and said pricing index of said service computed in the second computing step.

**15.** A recording medium recording a computer-readable program, said program comprising the steps of:

computing, on the basis of the number of exposures and a demand of information about a service in a network, a pricing index of said service;

computing a pricing index of said service on the basis of the number of exposures and a demand of said information about said service in a second network; and

computing a global pricing index of said service on the basis of said pricing index of said service computed in the first computing step and said pricing index of said service computed in the second computing step.

# F I G.1

EP 1 098 261 A2

# FIG.2

SEARCH KEYWORD MANAGING BLOCK 31 → SEARCH KEYWORD CREATING BLOCK 32 → SEARCH ENGINE 33

SEARCH ENGINE 33 → SEARCH RESULT STORAGE BLOCK 34

SEARCH RESULT STORAGE BLOCK 34 → EXPOSURES COMPUTING BLOCK 35 → TO PRICING INDEX COMPUTING SYSTEM 13

11

EP 1 098 261 A2

# F I G . 3

51

```
RESERVATIONS
COMPILATION
MANAGING
BLOCK
```

53

```
DEMAND
COMPUTING
BLOCK
```

TO PRICING INDEX
COMPUTING BLOCK 13

52

```
SALES
COMPILATION
MANAGING
BLOCK
```

12

# F I G . 4

FROM EXPOSURES
COMPUTING
SYSTEM 11

61

```
PRICING INDEX
COMPUTING
BLOCK
```

62

```
PRICING INDEX
EXPOSITION
BLOCK
```

FROM DEMAND
COMPUTING
SYSTEM 12

13

# F I G. 5

```
                    ┌──────────────────────────┐
                    │   START  EXPOSURES        │
                    │   COMPUTING  PROCESSING   │
                    └──────────────────────────┘
                                │
     ┌──────────────────────────▼──────────────────┐
     │  │  CREATE  A  SEARCH  KEYWORD          │ S1  │
     │  └─────────────────────────────────────┘     │
     │                    │                          │
     │  ┌─────────────────▼───────────────────┐     │
     │  │  SEARCH  FOR  CHARACTER             │     │
     │  │  STRING  CORRESPONDING  TO          │ S2  │
     │  │  SEARCH  KEYWORD                    │     │
     │  └─────────────────────────────────────┘     │
     │                    │                          │
     │  ┌─────────────────▼───────────────────┐     │
     │  │  STORE  RETRIEVED  CHARACTER        │ S3  │
     │  │  STRING  AND  URL  INFORMATION      │     │
     │  └─────────────────────────────────────┘     │
     │                    │                          │
     │  ┌─────────────────▼───────────────────┐     │
     │  │  EVALUATE  SEARCH  KEYWORD          │     │
     │  │  AND  MODIFY  SEARCH  KEYWORD       │ S4  │
     │  │  CREATING  RULE                     │     │
     │  └─────────────────────────────────────┘     │
     │                    │                          │
     │        NO      ┌───▼──────────────┐           │
     └────────────────┤ TO  END  SEARCH? │ S5        │
                      └──────────────────┘
                            │YES
        ┌───────────────────▼─────────────────┐
        │  COMPUTE  THE  NUMBER  OF           │ S6
        │  EXPOSURES                          │
        └─────────────────────────────────────┘
                            │
        ┌───────────────────▼─────────────────┐
        │  SUPPLY  COMPUTED                   │
        │  EXPOSURES  TO  PRICING             │ S7
        │  INDEX  COMPUTING  SYSTEM           │
        └─────────────────────────────────────┘
                            │
                    ┌───────▼───────┐
                    │      END      │
                    └───────────────┘
```

# F I G . 6

```
      ┌─────────────────────────────┐
      │      START DEMAND            │
      │  COMPUTING PROCESSING        │
      └─────────────────────────────┘
                    │
     ┌──────────────┼
     │              ▼
     │   ┌─────────────────────────────┐
     │   │  SET AREA, NETWORK, DATE,   │  S21
     │   │  AND CONTENT                │
     │   └─────────────────────────────┘
     │              │
     │              ▼
     │   ┌─────────────────────────────┐
     │   │  RETRIEVE AND COMPILE THE   │  S22
     │   │  NUMBER OF RESERVATIONS     │
     │   └─────────────────────────────┘
     │              │
     │              ▼
     │   ┌─────────────────────────────┐
     │   │  RETRIEVE AND COMPILE       │  S23
     │   │  THE NUMBER OF SALES        │
     │   └─────────────────────────────┘
     │              │
     │   NO         ▼
     └──────< TO END SEARCH? >  S24
                    │ YES
                    ▼
        ┌─────────────────────────────┐
        │  FROM THE NUMBER OF          │
        │  RESERVATIONS AND SALES,     │  S25
        │  COMPUTE DEMAND              │
        └─────────────────────────────┘
                    │
                    ▼
        ┌─────────────────────────────┐
        │  SUPPLY COMPUTED DEMAND      │
        │  TO PRICING INDEX COMPUTING  │  S26
        │  SYSTEM                      │
        └─────────────────────────────┘
                    │
                    ▼
              ┌──────────┐
              │   END    │
              └──────────┘
```

# F I G. 7

```
      ┌─────────────────────────────┐
      │   START PRICING INDEX       │
      │   COMPUTING PROCESSING      │
      └─────────────────────────────┘
                   │
                   ▼
      ┌─────────────────────────────┐
      │ CAPTURE THE NUMBER OF       │ S41
      │ EXPOSURES AND DEMAND        │
      └─────────────────────────────┘
                   │
                   ▼
      ┌─────────────────────────────┐
      │      SELECT FUNCTION        │ S42
      └─────────────────────────────┘
                   │
                   ▼
      ┌─────────────────────────────┐
      │ APPLY THE NUMBER OF         │
      │ EXPOSURES AND DEMAND        │ S43
      │ TO SELECTED FUNCTION        │
      │ TO COMPUTE PRICING INDEX    │
      └─────────────────────────────┘
                   │
                   ▼
      ┌─────────────────────────────┐
      │     STORE COMPUTED          │ S44
      │     PRICING INDEX           │
      └─────────────────────────────┘
                   │
                   ▼
      ┌─────────────────────────────┐
      │   EXPOSE PRICING INDEX      │ S45
      └─────────────────────────────┘
                   │
                   ▼
              ┌─────────┐
              │   END   │
              └─────────┘
```

# FIG.8

EP 1 098 261 A2

# F I G. 9

```
                          ┌──────────────┐
                          │  RESULT      │
                          │  COMPUTING   │──81
                          │  BLOCK       │
                          └──────┬───────┘
                                 ↕
     84                          82                    85
┌──────────────┐        ┌──────────────┐        ┌──────────────┐
│ PRICING INDEX│        │              │        │              │
│ COMPUTING    │───────→│  STORAGE     │───────→│  EXPOSITION  │─────→
│ BLOCK        │        │  BLOCK       │        │  BLOCK       │
└──────────────┘        └──────┬───────┘        └──────┬───────┘
                                 ↕                       │
                          ┌──────────────┐               ↓
                    83 ───│  FUNCTION    │        TO PRICING AGENT
                          │  GENERATING  │
                          │  BLOCK       │
                          └──────────────┘
```

<u>71</u>

# F I G. 10

START PRICING
AGENT PROCESSING

CAPTURE PARAMETER
FROM PRICING AGENT — S61

SET PRICING FUNCTION ON
THE BASIS OF PARAMETER — S62

SEND SET PRICING FUNCTION, PRICING
INDEX OBTAINED BY USE OF THE PRICING
FUNCTION, THE NUMBER OF USERS,
CONTENT DISTRIBUTION VOLUME, CONTENT — S63
USAGE FEE AND PERIOD COVERED TO
META PRICING AGENT

END

# F I G .11

$$\left(\begin{array}{c} \text{START META PRICING} \\ \text{AGENT PROCESSING} \end{array}\right)$$

S81

CAPTURE PRICING FUNCTION, PRICING INDEX, THE NUMBER OF USERS, CONTENT DISTRIBUTION VOLUME, CONTENT USAGE FEE, AND PERIOD COVERED FROM PRICING AGENT

S82

COMPUTE RESULT OF PRICING AGENT FOR PREDETERMINED PERIOD AND STORE THE RESULT

S83

GENERATE AND STORE PERFORMANCE EVALUATING FUNCTION FOR EVALUATING PERFORMANCE OF PRICING AGENT AND NEW PRICING FUNCTION

S84

SEND RESULT AND NEW PRICING FUNCTION AND, AS REQUIRED, PERFORMANCE EVALUATING FUNCTION TO PRICING AGENT

S85

REFLECT NEW PRICING FUNCTION ONTO FUNCTION FOR PRICING OWN SELF

S86

COMPUTE GLOBAL PRICING INDEX

S87

SEND GLOBAL PRICING INDEX TO PRICING AGENT

END

# F I G .12

EP 1 098 261 A2